# EUROPEAN PATENT APPLICATION

(11) **EP 4 306 661 A1**
(43) Date of publication of application: **17.01.2024**
(21) Application number: 22767042.9
(22) Date of filing: 04.03.2022
(51) Int. Cl.: C21D 6/00, C21D 9/00, C21D 9/46, C22C 38/00, C22C 38/46, C22C 38/54

(54) **MARTENSITIC STAINLESS STEEL SHEET HAVING EXCELLENT CORROSION RESISTANCE AND METHOD FOR MANUFACTURING SAME, AND MARTENSITIC STAINLESS BLADED PRODUCT**

(30) Priority: 11.03.2021 JP 2021039491
(71) Applicant: NIPPON STEEL Stainless Steel Corporation, Tokyo 100-0005 (JP)
(72) Inventor: TERAOKA, Shinichi, Tokyo 100-8071 (JP); SAKAIZAWA, Yuto, Tokyo 100-8071 (JP); KAWAUTI, Daisuke, Tokyo 100-8071 (JP); INOUE, Yoshiharu, Tokyo 100-0005 (JP)
(74) Representative: Vossius & Partner Patentanwälte Rechtsanwälte mbB
(86) International application number: PCT/JP2022/009534
(87) International publication number: WO 2022/191085

(57) **Abstract**

A martensitic stainless steel sheet has a steel composition including: by mass%, 0.30 to 0.60% of C; 0.05 to 1.00% of Si; 0.10 to 1.50% of Mn; 11.0 to 15.0% of Cr; 0.01 to 0.60% or less of Ni; 0.01 to 0.50% of Cu; 0.01 to 1.0% of Mo; 0.01 to 0.50% of V; 0.03% or less of Al; 0.01 to 0.05% of N; 0.01 % or less of O. The martensitic stainless steel sheet satisfies that: carbides observed in an area of a plate thickness of 1/2t ± 0.7 mm on a test surface parallel to a rolling direction and a plate thickness direction of the steel sheet has 3.0 or less of a carbide cleanliness index, the carbides being defined as inclusions corresponding to inclusions of Type B specified in JIS G0555; that a carbide area ratio is 2% or less through observation using a 200-fold optical microscope; or that a content of coarse carbides collected with a filter having 10-µm mesh in an extraction residue analysis with respect to an entire thickness of the steel sheet is 0.6 mass% or less in terms of a Cr content.

## Description

### TECHNICAL FIELD

The present invention relates to a martensitic stainless steel having an excellent corrosion resistance after quenching or after quenching and tempering. More specifically, the invention relates to: a martensitic stainless steel sheet having a high hardness and an excellent corrosion resistance, which is used for manufacturing cutters (e.g., knives and scissors), loom components, tools, and the like; a manufacturing method of the martensitic stainless steel sheet, and a martensitic stainless bladed product.

### BACKGROUND ART

General applications of martensitic stainless steel and steel types for the respective applications are briefly described. SUS420J1 steel and SUS420J2 steel are typically used for tools such as Western-tableware knives (table knives), scissors, loom components, and vernier calipers. SUS440A steel, EN1.4034 steel, and EN 1.4116 steel are used for Western-style kitchen knives, paring knives, and the like requiring higher hardness. SUS410 steel is generally used for disc brakes for two-wheel vehicle and constructional members such as reinforcing bars. This is because, in such applications, plating, coating, and rust-preventive oil for rust prevention are difficult to apply and high hardness that is resistant to abrasion is required. The standard for the martensitic stainless steel is defined by a carbon content. The martensitic stainless steel is classified into SUS410 steel having C: 0.15% or less and Cr: 11.5 to 13.5%, SUS420J1 steel having C: 0.16 to 0.25% and Cr: 12 to 14%, SUS420J2 steel having C: 0.26 to 0.40% and Cr: 12 to 14%, and SUS440A steel having C: 0.60 to 0.75% and Cr: 16 to 18%. It is also defined that EN1.4034 steel has C: 0.43 to 0.50% and Cr: 12.5 to 14.5% and EN1.4116 steel has C: 0.45 to 0.55% and Cr: 14.0 to 15.0%, Mo: 0.5 to 0.8%, and V: 0.1 to 0.2%. As the carbon content is higher, the obtained quenching hardness is higher, but productivity and toughness after quenching is lowered. Accordingly, in general, SUS410 steel is used in a quenched state or SUS420 steel and higher-carbon stainless steels are subjected to a sub-zero treatment and tempering after quenching, thereby improving toughness.

Corrosion resistance of these stainless steels is generally evaluated in terms of chemical components. It has been known that corrosion resistance is improved by adding Cr, Mo, and N to steel. A lot of studies have been conducted on effects of elements on corrosion resistance. Martensitic stainless steel can be evaluated by a pitting resistance index PRE = Cr+3.3Mo+16N. It has been reported that corrosion resistance improves at a larger value of PRE. Addition of a slight amount of Sn has also recently been considered in order to enhance corrosion resistance.

Since the above-described steels are sometimes polished for use after quenching, a content of Al that is a deoxidizing element also needs to be decreased in order to inhibit large inclusions and improve abrasivity. Since large inclusions may impair corrosion resistance, optimization of refining conditions in a steelmaking process has also been considered in order to decrease large inclusions and improve corrosion resistance.

It has further been considered that making carbides into a solution is promoted during quenching to reduce a heat treatment time by controlling a dispersion state of the carbides, and hot rolling conditions are optimized to improve toughness after quenching and tempering.

These findings are explained with reference to patent literatures. Firstly, Patent Literature 1 describes a high-hardness martensitic stainless steel excellent in corrosion resistance that contains C: less than 0.15%, Cr: 12.0 to 18.5%, and N: 0.40% to 0.80%.

Nitrogen is effective for improving corrosion resistance and is an inexpensive element for expanding an austenite range. However, nitrogen exceeding a solid solution content forms air bubbles during melting and casting, which hampers production of a satisfactory steel ingot. The solid solution content of nitrogen changes depending on chemical components and atmospheric pressure. Among the chemical components, chromium and carbon contents have a large influence. In a case where martensitic stainless steels such as SUS420J1 steel and SUS420J2 steel are cast under atmospheric pressure, the amount of dissolved nitrogen is generally reported as about 0.1%. Therefore, in Patent Literature 1, 0.40% or more of nitrogen forms a solid solution by pressure casting. However, the pressure casting is difficult to apply to continuous casting, has low productivity and is thus unsuitable for mass production. Moreover, nitrogen blow occurs even in the pressure casting.

Patent Literature 2 discloses a martensitic stainless steel sheet having excellent productivity and corrosion resistance, in which large inclusions (oxides) having a size of 10 µm or more, which impair corrosion resistance, are reduced to 0.2 pieces per cm² or less. In order to reduce inclusions, an Al content is reduced to 0.02% or less and an O content is reduced to 0.001 to 0.01%, and it is preferable that: stirring is reduced as short as one hour or less and then molten steel is left still from 3 to 30 minutes for inclusions to float in a melting process; and that a drawing speed is 2 m/min or less in the continuous casting.

Techniques for obtaining high hardness are exemplified by EN 1.4034 steel and EN1.4116 disclosed in Non-Patent Literature 1. An increase in a C content increases a solute C content and insoluble carbides that remain undissolved during quenching and after quenching and tempering. Depending on the cooling rate during quenching, sensitization may occur at grain boundaries or a carbide interface to lower corrosion resistance. The cooling rate during quenching needs to be increased so as to match an increase in the C content. The cooling rate can be increased by die quenching or quenching with use of a liquid bath such as an oil, water, and salted bath although requiring some works. Moreover, it is considered important to control the dispersed state of insoluble carbides since the insoluble carbides affect characteristics e.g., abrasion resistance and toughness, of cutters.

Patent Literature 3 discloses an intermediate material for stainless steel for cutters having an excellent carbide distribution. Hardness of the intermediate material can be increased by heat treatment for a short time during quenching, in which the intermediate material after hot rolling and before annealing is set to have 80% by volume or more of an FCC phase and a KAM value by SEM-EBSD method being 0.50 degrees or more or a full width at half maximum of a (200) plane of the FCC phase being 0.3degrees or more. Effects on the intermediate material are shown in photographs in which carbides are finely dispersed.

As described above, various techniques have been proposed, including a technique that balances high hardness and corrosion resistance for martensitic stainless steel and a technique of improving an efficiency of quenching and a quality of steel by controlling a dispersed state of carbides. In Patent Literature 1 described above, addition of nitrogen for improving rust resistance requires pressure casting, and the inventors have raised an issue that the pressure casting is difficult to apply to continuous casting and has low productivity. Moreover, even by pressure casting, nitrogen blow easily occurs and it is thus required to raise the solid solution content of nitrogen by adding Mn, Mo, Ni and the like, causing an increase in alloy costs.

Further, it is difficult for the method described in Patent Literature 2 to solve problems about corrosion resistance and abrasivity caused by large carbides other than oxides in high-carbon martensitic stainless steel as described in Non-Patent Literature 1.

The method described in Patent Literature 3 cannot sufficiently reduces the size of coarse carbides that are difficult to dissolve even during heating for hot rolling. Accordingly, this method cannot solve problems about corrosion resistance, abrasivity and the like caused by coarse carbides.

### CITATION LIST

### PATENT LITERATURE(S)

Patent Literature 1: JP 2002-256397 A
Patent Literature 2: JP 6635890 B
Patent Literature 3: JP 5645151 B

### NON-PATENT LITERATURE(S)

Non-Patent Literature 1: EN10088-2

### SUMMARY OF THE INVENTION

### PROBLEM(S) TO BE SOLVED BY THE INVENTION

In general, corrosion resistance of stainless steel is significantly influenced by chemical components of the stainless steel and evaluated in terms of, for instance, pitting resistance index PRE. The stainless steel has higher corrosion resistance as the pitting resistance index is higher. Herein, the corrosion resistance refers to a corrosion resistance in a neutral chloride aqueous solution environment. A method for evaluating the corrosion resistance is exemplified by the pitting corrosion potential measurement method for stainless steel specified in JIS G0577 and the salt spray test method specified in JIS Z2371. In uses in everyday indoor environments, in other words, except for uses in chemical and food plants, water storage tanks such as water heaters, and the seaside environment, it is extremely unlikely that stainless steel will be exposed to a high-concentration chloride aqueous solution in a dry and wet environment for a long period of time. Accordingly, about 13% of a Cr amount can provide a sufficient corrosion resistance, as seen from that SUS420J1 steel is used for Western tableware knives. Moreover, 12% of the Cr amount can provide a sufficient corrosion resistance for two-wheel disc brakes.

However, in some cases, the corrosion resistance expected for chemical components of a matrix material cannot be obtained. Sensitization is a typical cause of deterioration in corrosion resistance. In this phenomenon, Cr carbides precipitate in steel due to a welding temperature hysteresis, for instance, when materials are welded, and a Cr depleted zone is formed in the matrix material around the Cr carbides, impairing corrosion resistance. It has been known that sensitization occurs at SUS304 steel and welding portions of SUS430 steel when used at 650 to 700 degrees C for a long time.

The sensitization phenomenon of martensitic stainless steel is not well known. However, when a commercially available knife is subjected to a salt spray test, significant rust is often observed in the knife, from which occurrence of sensitization is inferred. Martensitic stainless steel, which is self-hardening, can obtain quenching hardness comparable to that by water quenching even by air quenching. Accordingly, quenching is often conducted through slow cooling. Therefore, it is inferred that Cr carbides have precipitated and sensitization has occurred during cooling. Since sensitization is more promoted in a type of stainless steel having a higher carbon content, sensitization easily occurs in EN1.4034 steel, EN1.4116 steel, SUS440 steel and the like. Accordingly, a technique of inhibiting sensitization in high-carbon martensitic stainless steel has been desired.

Quenching in various liquids such as oil, water, and salt bath, or die quenching may be performed for the purpose of preventing sensitization of high-carbon martensitic stainless steel. A sufficient cool rate therefor, however, is not obtainable when the plate thickness is large. Accordingly, an object of the invention is to provide a martensitic stainless steel sheet, a manufacturing method of the martensitic stainless steel sheet, and a martensitic stainless bladed product, in which sensitization is unlikely to occur even when a sufficient cooling rate is not obtained after quenching.

### MEANS FOR SOLVING THE PROBLEM(S)

In order to achieve the above object of the invention, the inventors examined in detail a sensitization phenomenon during a quenching heat treatment of a high-carbon martensitic stainless steel, and found that coarse carbides having a total length of 17 µm or more, which were evaluated as Type B inclusions caused by macro-segregation during solidification, promoted sensitization. In general, in order to prevent an increase in a diameter of austenite grains, heating for quenching is conducted at a temperature at which some carbides remain undissolved and growth of austenite grains is impaired. The insoluble carbides are thus finely dispersed even after the quenching Most of carbides generated during the quenching heating are relatively fine and no Cr depleted zone is formed around the carbides during quenching cooling, which does not impair corrosion resistance. However, coarse carbides caused by macro-segregation or semimacro-segregation during solidification tend to be continuously precipitated in a beaded pattern in a range between one fourth thickness (1/4t) portion and a plate-thickness central portion of a thin plate product and easily form a Cr depleted zone on an interface of the coarse carbides. It has thus been found that corrosion resistance is improved by decreasing a precipitation amount of such coarse carbides. It has also been found that such coarse carbides easily form a solid solution during heating for hot rolling by being subjected to a transformation treatment for five or more hours in a temperature range from 600 degrees C to 800 degrees C in a slab cooling process.

The gist of the invention is as follows.
(1) A martensitic stainless steel has a steel composition including: by mass%, 0.30 to 0.60% of C; 0.05 to 1.00% of Si; 0.10 to 1.50% of Mn; 0.035% or less of P; 0.010% or less of S; 11.0 to 15.0% of Cr; 0.01 to 0.60% or less of Ni; 0.01 to 0.50% of Cu; 0.01 to 1.0% of Mo; 0.01 to 0.50% of V; 0.03% or less of Al; 0.01 to 0.05% of N; 0.01% or less of O; and a balance consisting of Fe and inevitable impurities,
   the martensitic stainless steel sheet satisfying:
      (A) carbides observed in an area of a plate-thickness central portion ± 0.7 mm on a test surface parallel to a rolling direction and a plate thickness direction of the steel sheet has 3.0 or less of a carbide cleanliness index, the carbides being defined as inclusions corresponding to inclusions of Type B specified in JIS G0555;
      (B) a carbide area ratio in the area of the plate-thickness central portion ± 0.7 mm on the test surface parallel to the rolling direction and the plate thickness direction of the steel sheet is 0.6% or less through observation using a 100-fold optical microscope; and
      (C) a content of coarse carbides collected with a filter having 10-µm mesh in an extraction residue analysis with respect to an entire thickness of the steel sheet is 0.6 mass% or less in terms of a Cr content,
   in which the carbides in the (A) and (B) are colored with Murakami's reagent, and the carbide cleanliness index is inclusion cleanliness defined in the test method A of JIS G0555 in the (A), and in the (B), the carbide area ratio is optionally measured by EBSD method.
(2) In the martensitic stainless steel sheet according to (1), in addition to the above elements and in place of a part of the Fe, the steel composition further includes: one or more elements of 0.001% to 0.20% of Sn, 0.001% to 0.20% of Co, 0.005% to 0.1% of Ti, 0.005% to 0.5% of Nb, 0.005% to 0.1% of Zr, 0.005% to 0.1% of W, 0.0005% to 0.0030% of B, 0.0001% to 0.0030% of Ca, 0.0001% to 0.0030% of Mg, 0.0001% to 0.0030% of La, 0.0001% to 0.0030% of Ce, and 0.0001% to 0.0030% of Y.
(3) A martensitic stainless bladed product has a steel composition including: by mass%, 0.30 to 0.60% of C; 0.05 to 1.00% of Si; 0.10 to 1.50% of Mn; 0.035% or less of P; 0.010% or less of S; 11.0 to 15.0% of Cr; 0.01 to 0.60% or less of Ni; 0.01 to 0.50% of Cu; 0.01 to 1.0% of Mo; 0.01 to 0.50% of V; 0.03% or less of Al; 0.01 to 0.05% of N; 0.01% or less of O; and a balance consisting of Fe and inevitable impurities,
   the martensitic stainless bladed product satisfying:
      (A) carbides observed in an area of a plate-thickness central portion ± 0.7 mm on a test surface parallel to a rolling direction and a plate thickness direction of the product has 3.0 or less of a carbide cleanliness index, the carbides being defined as inclusions corresponding to inclusions of Type B specified in JIS G0555;
      (B) a carbide area ratio in the area of the plate-thickness central portion ± 0.7 mm on the test surface parallel to the rolling direction and the plate thickness direction of the product is 0.6% or less through observation using a 100-fold optical microscope;
      (C) a content of coarse carbides collected with a filter having 10-µm mesh in an extraction residue analysis with respect to an entire thickness of the product is 0.6 mass% or less in terms of a Cr content; and
   hardness of a portion at a plate thickness of 1/2t of the product is Hv 500 or more,
   in which the carbides in the (A) and (B) are colored with Murakami's reagent, and the carbide cleanliness index is inclusion cleanliness defined in the test method A of JIS G0555 in the (A), and in the (B), the carbide area ratio is optionally measured by EBSD method.
(4) In the martensitic stainless steel bladed product according to (3), in addition to the above elements and in place of a part of the Fe, the steel composition further includes: one or more elements of 0.001% to 0.20% of Sn, 0.001% to 0.20% of Co, 0.005% to 0.1% of Ti, 0.005% to 0.5% of Nb, 0.005% to 0.1% of Zr, 0.005% to 0.1% of W, 0.0005% to 0.0030% of B, 0.0001% to 0.0030% of Ca, 0.0001% to 0.0030% of Mg, 0.0001% to 0.0030% of La, 0.0001% to 0.0030% of Ce, and 0.0001% to 0.0030% of Y.
(5) A manufacturing method of the martensitic stainless steel sheet according to (1) or (2) includes: casting a slab of the stainless steel comprising the steel composition according to (1) or (2); subsequently subjecting the slab to a heat treatment for five hours or more at a temperature in a range from 800 to 600 degrees C during cooling of the slab; subsequently heating the slab for 40 minutes or more at a temperature in a range from 1200 to 1300 degrees C; hot-rolling the slab using a tandem hot rolling mill in which rough hot rolling and finish hot rolling are performed in series to provide a hot rolled sheet; coiling the hot rolled sheet at a temperature in a range from 800 to 900 degrees C; and subsequently annealing the coiled hot-rolled sheet for two hours or more at a temperature in a range from 750 to 900 degrees C.
(6) The manufacturing method of the martensitic stainless steel sheet according to (5) further includes: subsequent to the annealing of the hot rolled sheet, subjecting the annealed hot-rolled sheet to cold rolling and annealing.

Since a martensitic stainless steel allowing a high-carbon martensitic stainless steel sheet with the carbon content exceeding 0.30% to exhibit 3.0 or less of the carbide cleanliness index is unlikely to generate sensitization during quenching, the martensitic stainless steel provides a high-quality martensitic stainless steel sheet for cutters exhibiting an excellent corrosion resistance after quenching and an excellent abrasivity. Even in mass production processes using continuous casting and tandem hot rolling equipment, the invention can provide a martensitic stainless steel sheet having an excellent corrosion resistance at a low cost.

### BRIEF DESCRIPTION OF DRAWINGS

Fig. 1A shows coarse carbides connected to each other in a beaded pattern due to macro-segregation, revealed by the Murakami's reagent, showing a case of a carbide cleanliness index being 3.5.
Fig. 1B shows coarse carbides connected to each other in a beaded pattern due to macro-segregation, revealed by the Murakami's reagent, showing a case of a carbide cleanliness index being 0.
Fig. 2 shows a relationship between the carbide cleanliness index and corrosion resistance.
Fig. 3 shows a relationship between the carbide cleanliness index and abrasivity.

### DESCRIPTION OF EMBODIMENT(S)

The invention will be described in detail below.

The inventors vigorously searched corrosion resistance of a high-carbon martensitic stainless steel after quenching. As a result, the inventors found that the corrosion resistance after quenching was significantly lower than corrosion resistance, which is assumed based on a chromium amount, of a typical stainless steel. Various considerations have thus been made on a cause and an improving method of the corrosion resistance. A lot of high-carbon martensitic stainless steel cutters on the market were subjected to a corrosion test and then a lot of corrosion origin points were investigated. As a result, most of the corrosion origin points were sensitization sites due to formation of a Cr depleted zone and the rest of the corrosion origin points were water-soluble inclusions (e.g., CaS), crushed inclusions, the inside of carbides mainly composed of iron and chromium, and a crevice in a matrix material interface. These phenomena can be easily reproduced by slowing a cooling rate during quenching in a laboratory to a level of a cooling rate during air quenching. The cooling rate during quenching is increased to a level of a cooling rate during water quenching, whereby sensitization is substantially improvable. The sensitization during slow cooling for quenching is a phenomenon observed along prior austenite grain boundaries and at interfaces between insoluble carbides and austenite. Especially, as the size of the insoluble carbides is larger, the cooling rate for quenching required for preventing sensitization needs to be higher. A lot of coarse Cr carbides are present at a plate-thickness central portion of a steel sheet. The plate-thickness central portion of the steel sheet is exposed on end surfaces of a cutter. Accordingly, coarse Cr carbides appear on the end surfaces such as an edge and a back side of the blade of the cutter. Corrosion at this portion of the cutter is almost determined to be caused by coarse Cr carbides. During heating for quenching, fine Cr carbides dissolve first, and coarse Cr carbides grow, forming therearound a Cr depleted zone. Further, also during cooling for quenching, coarse Cr carbides grow, forming therearound a Cr depleted zone, which is considered to impair corrosion resistance. Although the Cr carbides per se contain iron, a chromium concentration in the Cr carbides is 40 mass% or more. Therefore, it is also considered that corrosion resistance of the Cr carbides per se is higher than that of the matrix material to generate a local potential difference, which promotes corrosion near the carbides. When the carbides become finer, an area as the cathode is decreased and corrosion origin points are less likely to occur.

Presuming a formation mechanism of coarse carbides from morphology and distribution state thereof, primary carbides, or so-called eutectic carbides, resulting from macro- or semi-macro segregation during casting are considered to be the origin of coarse carbides. In order to make the primary carbides harmless, a soaking treatment, in which slabs and ingots are heated at a temperature of 1200 degrees C or higher for a long period of time, is effective. It is more effective for making coarse carbides caused by coarse macro-segregation into a solution and reducing solidification segregation to perform a breakdown treatment, which is a combination of a high-temperature long-time heat treatment and rolling, before hot rolling. Furthermore, it is also effective for reducing macro-segregation to electromagnetically stir unsolidified molten steel in a slab during continuous casting. On the other hand, since macro-segregation noticeably appears in the plate-thickness central portion, it is also effective to utilize only a columnar crystal portion of the slab to produce a thin plate product free of coarse carbides.

Coarse carbides in the slab cast by continuous casting can be reduced during breakdown and soaking of the coarse carbides and a hot rolling process. However, prolonged soaking exceeding five hours, breakdown exceeding 20% in rolling reduction, and heating exceeding four hours before hot rolling impair productivity. Therefore, it is required to reduce coarse carbides without impairing productivity.

As described above, the coarse carbides in solidified segregation portions have difficulty in forming a solution. In this regard, the inventors have found that performing a precipitate transformation treatment for five or more hours in a temperature range from 800 degrees C to 600 degrees C in the slab cooling process so that coarse carbides are transformed to carbides that easily form a solution is the most important and a requisite step. This is a new technique for making coarse carbides harmless without the need for long-term soaking, high-reduction breakdown, and long-term hot rolling heating, which are industrially difficult.

For a mass production of a high-carbon martensitic stainless steel in which coarse carbides are at issue, since molten steel is cast by continuous casting or large-sized ingot casting, coarse carbides caused by macro-segregation during solidification remain in a thin plate product without forming a solution. Such large carbides do not form a solution even during quenching but promote sensitization, decreasing corrosion resistance. Moreover, since coarse carbides, which are crushed or stretched by hot rolling and cold rolling, are intermittently distributed in strips in a thin plate product, linear defects are generated during polishing, deteriorating abrasivity. However, the microscopic examination method of non-metallic inclusions in steel specified in JIS G 0555 is a technique for evaluating oxides and carbonitrides of Ti, Nb, and Zr. Coarse carbides in martensitic stainless steel cannot be observed with a microscope. The inventors use Murakami's reagent as an etching liquid with which only carbides are selectively etched with high efficiency without strongly corroding martensite, ferrite, and austenite structures of the steel. After etching the steel and coloring carbides, which are mainly composed of iron and chromium, with the Murakami's reagent, the carbides are evaluated according to the microscope test method for non-metallic inclusions in steel specified in JIS G 0555, whereby coarse carbides that have a large impact on quality can be evaluated to represent the carbide cleanliness index. This method is most suitable for a quantitative evaluation of coarse carbides that are continuous in a beaded pattern, but the evaluation of cleanliness of inclusions requires skill, and an accuracy of analysis by image processing has not yet been fully developed. Therefore, it is possible to perform measurement by an area ratio, although the accuracy is lowered. In this case, 3.0 or less of the carbide cleanliness index substantially corresponds to 0.6% or less of a carbide area ratio. As another evaluation method, there is also a method of melting a material across the entire thickness thereof by the iodine-methanol method, separating and collecting precipitates with a 10-µm mesh filter, and analyzing the precipitates. 0.5% or less of a precipitated Cr amount measured by this method corresponds to 3.0 or less of the carbide cleanliness index. By establishing a quantitative evaluation method for the coarse inclusions, it is possible to establish manufacturing conditions for making the coarse carbides of a slab harmless.

Based on the above findings, the invention has discovered the optimum balance of chemical components for martensitic stainless steel for intended uses. With regard to the martensitic stainless steel sheet and the martensitic stainless bladed product of the invention, the reasons for limiting each of the chemical components will be described below. It should be noted that the unit "%" for a content of each element means "mass%" in the following description, unless otherwise specified.

### C: 0.30 to 0.60%

C is an element that controls quenching hardness. In order to stably obtain hardness required for cutters with high wear resistance, which is required for high-carbon martensitic stainless steel, a C content needs to be 0.30% or more. On the other hand, excessive addition of C promotes sensitization during quenching and impairs corrosion resistance, and insoluble carbides decrease toughness after quenching. Therefore, the C content is 0.60% or less. Considering the decrease in hardness and toughness due to changes in quenching heating conditions, it is desirable to set the C content in a range from 0.40% to 0.55%.

### Si: 0.05 to 1.00%

Si is necessary for deoxidation during melting and refining, and is also effective for suppressing oxide scale formation during the quenching heat treatment. An Si content is thus 0.05% or more. The Si content is 1.00% or less since Si narrows an austenite single-phase temperature range and impairs quenching stability. In order to reduce an occurrence rate of defects caused by oxide inclusions, the Si content is desirably 0.30% or more. The Si content is desirably 0.50% or less since Si narrows the austenite single-phase temperature range and impairs quenching stability.

### Mn: 0.10 to 1.50%

Although Mn is an austenite stabilizing element, Mn promotes formation of oxide scales during the quenching heat treatment and increases subsequent polishing loads. The upper limit of an Mn content is thus 1.50%. Considering deterioration in corrosion resistance due to coarsening of sulfide inclusions such as MnS, the Mn content is desirably 1.0% or less. Since Mn has an effect of fixing S in steel as MnS and improving hot workability, the Mn content is 0.10% or more. Since an S concentration may be increased depending on steel refining conditions, the Mn content is preferably 0.5% or more.

### P: 0.035% or Less

P is an element contained in a form of impurities in a raw material that is hot metal or an alloy (e.g. ferrochrome). Since P is an element that is harmful to toughness of a hot-rolled annealed sheet and toughness after quenching, a P content is 0.035% or less. Since P is also an element for deteriorating workability, a P content is desirably 0.030% or less. Since excessive reduction of P leads to an increase in cost, for instance, due to the need to use high-purity raw materials, the lower limit of P is preferably 0.010%.

### S: 0.010% or Less

S is an element that is not likely to form a solid solution in the austenite phase and segregates at grain boundaries to promote deterioration in hot workability. Since S at a content exceeding 0.010% produces notable effects, an S content is 0.010% or less. As the S content is smaller, sulfide inclusions are decreased and corrosion resistance is improved. However, since decreasing the S content increases desulfurization loads and the production cost, the lower limit of the S content is preferably 0.001%. The S content is preferably in a range from 0.001% to 0.008%.

### Cr: 11.0 to 15.0%

A Cr content is required to be at least 11.0% or more in order to maintain the corrosion resistance required in the main uses of martensitic stainless steel. The upper limit of the Cr content is 15.0% in order to prevent formation of residual austenite after quenching. In order to make these properties more effective, the range of the Cr content is preferably from 12% of the lower limit to 14% of the upper limit.

### Ni: 0.01 to 0.60%

As with Mn, Ni is an austenite stabilizing element. During heating for quenching, C, N, Mn, and the like in a top layer of steel may decrease due to decarburization, denitrification, and oxidation, forming ferrite in the top layer. However, due to a high oxidation resistance, Ni does not decrease in the top layer and is very effective for stabilizing an austenite phase. Since the above effect appears from 0.01%, an Ni content is 0.01% or more. However, Ni is an expensive material, the Ni content is 0.60% or less. Addition of a large amount of Ni may lead to deterioration in press formability due to solid-solution strengthening in hot rolled and annealed sheets. The upper limit of the Ni content is thus desirably 0.30% or less. Considering the effect for uniform scale formation during quenching, the lower limit of the Ni content is preferably 0.05% or more.

### Cu: 0.01 to 0.50%

Cu is unavoidably contained in many cases, for instance, by contamination from scraps during smelting. However, if a high-purity material is used and Cu is eliminated, active dissolution may be promoted during growth of pitting corrosion to deteriorate corrosion resistance. 0.01% or more of a Cu content is required. For steel types with low PRE, the Cu content is preferably 0.02% or more in order to inhibit deterioration in corrosion resistance. Although Cu may be purposefully added in order to improve austenite stability, an excessive Cu content deteriorates hot workability and corrosion resistance. Thus the Cu content is 0.50% or less. Cu may precipitate during quenching and tempering to damage soundness of a passivation film, deteriorating corrosion resistance. The Cu content is thus preferably 0.20% or less.

### Mo: 0.01 to 1.0%

Mo is an element that is effective for improving corrosion resistance. However, since Mo is an element stabilizing a ferrite phase similar to Sr and Si, Mo narrows a quenching heating temperature range to generate untransformed ferrite after quenching. Further, Mo enhances resistance to temper softening to increase an annealing time of a hot rolled sheet, deteriorating productivity. The upper limit of an Mo content is thus 1.0%. The Mo content is an expensive element, however, has an effect of compensating for corrosion resistance of sensitization sites. The lower limit of the Mo content is thus 0.01 %. The Mo content is preferably 0.02% or more in order to suppress the progress of pitting corrosion. The Mo content is preferably 0.8% or less in order to stabilize a δ ferrite phase during solidification and avoid promoting sensitization due to generation of residual ferrite.

### V: 0.01 to 0.50%

V is often inevitably mixed in from an alloy material such as ferrochrome. Due to having a strong effect of narrowing the austenite singe-phase temperature range, a V content is 0.50% or less. Moreover, V is an element with high carbide-forming ability, and Cr carbides with V carbides as nuclei tend to be kept long at a solutionizing temperature. The V content is preferably 0.3% or less. V forms a solid solution in carbonitrides, which has an effect of finely dispersing precipitation of V. The lower limit of the V content is thus 0.01% or more. Considering productivity and production costs comprehensively, desirably, the lower limit is 0.03% and the upper limit is 0.20%.

### AI: 0.03% or Less

Al is an effective element for deoxidation, however, may increase the basicity of slag, precipitate water-soluble inclusions CaS in steel, and reduce corrosion resistance. The upper limit of an Al content is thus 0.03%. Considering deterioration in abrasivity due to alumina non-metallic inclusions, the Al content is preferably 0.01% or less. The Al content is preferably 0.003% or more in order to obtain the deoxidation effect caused by a combination with Si and Mn. Al may not be contained.

### N: 0.01% to 0.05%

As with C, N has an effect of increasing quenching hardness. In addition, unlike C, N improves corrosion resistance in the following two points: one is to strengthen a passivation film and the other is to suppress precipitation of chromium carbides (suppress the Cr depleted zone). In order to obtain the above effects, an N content is 0.01% or more. However, since excessive addition causes blowholes during casting under atmospheric pressure, the N content is 0.05% or less. N exhibits an effect of inhibiting sensitization, and the optimal content range therefor depends on an Sn content. Sn is an expensive element and Sn addition is preferably limited to a minimum to suppress an increase in raw material costs. Assuming that the Sn content is small, the N content is preferably 0.025% or more in order to suppress sensitization. Moreover, since N increases hardness of the hot rolled and annealed sheet and lowers the workability, the N content is preferably 0.035% or less.

### O: 0.01% or Less

O generally exists as oxide inclusions, among which large inclusions, together with water-soluble sulfides, become corrosion origin points. O is also harmful to durability of cutters. The upper limit of an O content is thus 0.01 %. In mirror-finished cutters, oxide inclusions may be visually observed or may be recognized as defects caused by uneven polishing during polishing. The O content is preferably 0.008% or less. Although the lower O content is typically preferred, the lower limit of the O content is preferably 0.003% or more since it is difficult in terms of productivity and costs to industrially float and remove oxides generated in molten steel.

A steel composition in the invention includes the above components and the balance consisting of Fe and inevitable impurities. In addition to the above elements and in place of a part of the Fe, the steel composition in the invention may include one or more elements of 0.001% to 0.2% of Sn, 0.001% to 0.2% of Co, 0.005% to 0.1% of Ti, 0.005% to 0.5% of Nb, 0.005% to 0.1% of Zr, 0.005% to 0.1% of W, 0.0005% to 0.0030% of B, 0.0001% to 0.0030% of Ca, 0.0001% to 0.0030% of Mg, 0.0001% to 0.0030% of La, 0.0001% to 0.0030% of Ce, and 0.0001% to 0.0030% of Y. The upper limits of the respective elements may be restricted with use of high-purity materials.

### Sn: 0.001 to 0.20%

Sn is a segregating element, and is concentrated not only at grain boundaries of the matrix material but also at interfaces between precipitates and the matrix material to suppress growth and coarsening of the precipitates. Therefore, since Sn suppresses sensitization during quenching cooling and provides an effect of improving corrosion resistance, it is preferable to add Sn of 0.001% or more. However, it is known that Sn has a low solid solution content in the austenite phase and Sn causes cracks during hot rolling or defects in plain steel. In addition, when steel is aged at a temperature in a range from 400 to 700 degrees C for a long time, in some cases, Sn deteriorates toughness of steel. Therefore, an Sn content is desirably decreased as much as possible and is thus preferably added at 0.20% or less.

### Co: 0.001 to 0.20%

Co is an element of increasing strength and fracture toughness after tempering. Since the effect is clearly obtained when a Co content is 0.001% or more, it is preferable to set the lower limit to 0.001% or more. However, since Co serving as a ferrite stabilizing element is a factor for residual δ ferrite, a Co content is preferably 0.20% or less.

### Nb: 0.005 to 0.50%

Nb finely precipitates as carbonitrides during hot rolling and becomes precipitation nuclei of Cr carbides, which has the effect of making the Cr carbonitrides fine and promoting formation of a solution during the quenching heat treatment. Nb is thus preferably added as needed. Since the effect is obtained when an Nb content is 0.005% or more, the lower limit of the Nb content is preferably 0.005%. However, if an excessive Nb content is added, coarse Nb(C, N) may precipitate in the temperature range equal to or more than the hot rolling heating temperature and may generate defects due to inclusions. The upper limit of the Nb content is preferably 0.50% or less.

### Ti: 0.005% to 0.1%

Ti finely precipitates as carbonitrides during hot rolling and becomes precipitation nuclei of Cr carbides, which has the effect of refining the Cr carbonitrides and promoting formation of a solution during the quenching heat treatment. Ti is thus preferably added as needed. Since the effect is clearly obtained when a Ti content is 0.005% or more, the lower limit of the Ti content is preferably 0.005% or more. However, if an excessive Ti content is added, coarse Ti may precipitate in the temperature range equal to or more than the hot rolling heating temperature and may generate defects due to inclusions. The upper limit of the Ti content is thus preferably 0.1% or less.

### Zr: 0.005% to 0.1%

Zr finely precipitates as carbonitrides during hot rolling and becomes precipitation nuclei of Cr carbides, which has the effect of making the Cr carbonitrides fine and promoting formation of a solution during quenching heating. Zr is thus preferably added as needed. Since the effect is obtained when a Zr content is 0.005% or more, the lower limit of the W content is preferably 0.005%. However, if an excessive Zr content is added, coarse Zr(C, N) may precipitate in the temperature range equal to or more than the hot rolling heating temperature and may generate defects due to inclusions. The upper limit of the Zr content is preferably 0.1% or less.

### W: 0.005% to 0.1%

W finely precipitates as carbonitrides during hot rolling and becomes precipitation nuclei of Cr carbides, which has the effect of making the Cr carbonitrides fine and promoting formation of a solution during quenching heating. W is thus preferably added as needed. Since the effect is obtained when a W content is 0.005% or more, the lower limit of the W content is preferably 0.005%. However, if an excessive W content is added, coarse W(C, N) may precipitate in the temperature range equal to or more than the hot rolling heating temperature and may generate defects due to inclusions. The upper limit of the W content is preferably 0.1% or less.

### B: 0.0005% to 0.0030%

Since B improves high-temperature ductility during hot rolling and suppresses a decrease in yield caused by edge cracks in a hot rolled plate, B may be added to steel as needed. In order to exhibit the above-described effect, the lower limit of a B content is preferably 0.0005% or more. However, if an excessive B content is added, toughness and corrosion resistance are impaired due to precipitation of Cr₂B and (Cr, Fe)₂₃(C, B)₆. The upper limit of the B content is thus 0.0030%. Considering workability and production cost, more preferably, the lower limit is 0.0008% and the upper limit is 0.0015%.

### Ca: 0.0001% to 0.0030%

Ca serves as a desulfurizing element and reduces sulfur in steel to improve hot workability. A Ca content added is thus preferably 0.0001% or more. Meanwhile, it is well known that Ca sulfides become corrosion origin points depending on a size and a state thereof. The upper limit of the Ca content is thus preferably 0.0030% or less.

### Mg: 0.0001% to 0.0030%

As with Ca, Mg also serves as a desulfurizing element and reduces sulfur in steel to improve hot workability. An Mg content added is thus preferably 0.0001% or more. Meanwhile, since Mg sulfides become corrosion origin points depending on a size and a state thereof, the upper limit of the Mg content is preferably 0.0030% or less.

### La: 0.0001% to 0.0030%

La also serves as a desulfurizing element and reduces sulfur in steel to improve hot workability. An La content added is thus preferably 0.0001% or more. Unlike Ca sulfides and Mg sulfides, it is known that La sulfides are unlikely to become corrosion origin points. However, La is an element with a large specific gravity, and segregation of La may form large inclusions and cause inclusion defects. The upper limit of the La content is thus 0.0030% or less.

### Ce: 0.0001% to 0.0030%

Ce also serves as a desulfurizing element and reduces sulfur in steel to improve hot workability. A Ce content added is thus preferably 0.0001% or more. Unlike Ca sulfides and Mg sulfides, it is known that Ce sulfides are unlikely to become corrosion origin points. However, Ce is an element with a large specific gravity, and segregation of Ce may form large inclusions and cause inclusion defects. The upper limit of the Ce content is thus 0.0030% or less.

### Y: 0.0001% to 0.0030%

Y also serves as a desulfurizing element and reduces sulfur in steel to improve hot workability. A Y content added is thus preferably 0.0001% or more. Unlike Ca sulfides and Mg sulfides, it is known that Y sulfides are unlikely to become corrosion origin points. However, Y is an element with a large specific gravity, and segregation of Y may form large inclusions and cause inclusion defects. The upper limit of the Y content is thus 0.0030% or less.

A stainless steel of the invention is defined as "martensitic stainless steel" according to the above chemical composition of the invention. The martensitic stainless steel sheet of the invention, both hot rolled and cold rolled, undergoes annealing. Accordingly, a crystal structure of the martensitic stainless steel sheet is a structure including ferrite and carbides. A martensitic stainless bladed product of the invention is obtained by the above-described martensitic stainless steel sheet of the invention as a base material being shaped into a cutter and subjected to the quenching heat treatment. Thus a crystal structure of the martensitic stainless bladed product is mainly martensitic structure.

Here, a method of manufacturing the martensitic stainless steel sheet and the martensitic stainless bladed product described above, both of which have an improved inclusion cleanliness, will be described.

A manufacturing method of a hot-rolled annealed coil of a martensitic stainless steel is provided. The manufacturing method includes: casting a slab having the above composition; subsequently subjecting the slab to a carbide transformation treatment for five hours or more at a temperature in a range from 800 to 600 degrees C during cooling; subsequently heating the slab for 40 minutes or more at a temperature in a range from 1200 to 1300 degrees C; hot-rolling the slab using a tandem hot rolling mill in which rough hot rolling and finish hot rolling are performed in series to provide a hot rolled sheet; coiling the hot rolled sheet at a temperature in a range from 800 to 900 degrees C; subsequently annealing the coiled hot-rolled sheet for two hours or more at a temperature in a range from 700 to 900 degrees C; and pickling the annealed sheet. A manufacturing method of a cold-rolled annealed coil of a martensitic stainless steel is provided. The manufacturing method includes: subsequent to the above treatments, further subjecting the pickled sheet to cold rolling and annealing. By using the manufacturing method described above, a martensitic stainless steel with improved cleanliness of inclusions can be manufactured without performing soaking or breakdown as in the conventional method. The martensitic stainless steel sheet of the invention is either the above manufactured hot-rolled annealed coil (hot rolled product) or the above manufactured cold-rolled annealed coil (cold rolled product).

During cooling the cast slab, it is required for controlling carbides to perform the heat treatment for five hours or more at a temperature in a range from 800 to 600 degrees C. Since coarsening of carbides proceeds at a temperature exceeding 800 degrees C, a temperature needs to be 800 degrees C or less. Since transformation of carbides requires long time at a temperature less than 600 degrees C, a temperature needs to be 600 degrees C or more. A temperature in a range from 650 to 750 degrees C is desirable in order to shorten a time for controlling carbides.

It is required to heat the slab at a temperature in a range from 1200 to 1300 degrees C during hot rolling. At a temperature less than 1200 degrees C, making carbides into a solution does not proceed and it is thus difficult to improve cleanliness of inclusions in the product. On the other hand, at a temperature exceeding 1300 degrees C, the slab sags in a heating furnace due to a decrease in high-temperature strength, or a thick decarburized layer is formed on a top layer to decrease quenching hardness of the product. A heating temperature for achieving both making carbides into a solution and reducing the decarburized layer is desirably in a range from 1230 to 1260 degrees C. At this time, the slab needs to be held at the above heating temperature for 40 minutes or more of the heating time. The heating time is desirably 60 minutes or more in order that carbides form a solution and is desirably 200 minutes or less in order that the decarburized layer on the top layer reduces.

The coiling temperature of the hot rolled sheet needs to be in a range from 800 to 900 degrees C in order to suppress re-growth of coarse carbides and precipitate fine carbides to soften the hot rolled sheet. At a temperature of less than 800 degrees C, a cooling rate of the coil is high at front and rear ends of the coil and the coil is likely to have cracks during delivery. On the other hand, at a temperature exceeding 900 degrees C, since recrystallization of the austenite structure promotes, precipitation sites of carbides decrease and coarse carbides re-precipitate. In subsequent annealing of the hot rolled sheet, carbides finely precipitate to soften the sheet. Considering the balance between the above two processes, it is desirable to coil the sheet at a temperature in a range from 830 to 880 degrees C.

In the subsequent annealing of the hot rolled sheet, it is required to perform a heat treatment for two or more hours at a temperature in a range from 750 to 900 degrees C. A temperature of less than 750 degrees C requires a long time for precipitation of carbides, which is industrially unacceptable. On the other hand, at a temperature exceeding 900 degrees C, coarsening of carbides unfavorably proceeds. In the heat treatment for less than two hours, variations in the quality of the material inside the coil occur due to a non-uniform temperature inside the coil. A temperature in a range from 800 to 880 degrees C is desirable in order to precipitate a lot of fine carbides and thus provide a soft structure to which cold rolling is easily applied.

### Coarse Carbides

In a high-carbon martensitic stainless steel, especially C and Cr concentrate in a macro-segregation portion during solidification and coarse Cr carbides are crystallized or precipitated, which impairs corrosion resistance after quenching and abrasivity. However, according to the microscopic examination method specified in JIS G 0555, it is difficult to identify and evaluate substances other than oxides, sulfides, and carbonitrides of Nb and Ti, and it is difficult to identify causes of quality issues such as corrosion and poor abrasivity. Etching is performed for evaluation of a crystal grain size in a microscope test. In the martensitic stainless steel, an interface on which carbides are finely dispersed is selectively corroded during structural etching, which makes it difficult to distinguish grain boundaries, inclusions, fine carbides, and coarse carbides from each other. For this reason, a general corrosive etchant is unable to highly accurately identify only coarse carbides at issue caused by solidification segregation for evaluation.

The inventors evaluated various etchants by trial and error. As a result, the inventors have found that etching by the Murakami's reagent is most suitable since the Murakami's reagent colors only carbides in the steel and corrodes almost no other structure. It is described in a metal data book that the Murakami's reagent includes 10 g of red prussiate of potash, 10 g of caustic potash, and 100 mL of water. Etching is generally performed by normal temperature immersion, but may be performed by heating. There is also a Beraha reagent that colors only the matrix material without coloring carbides contrary to the Murakami's reagent. Any other etching methods may be used as long as carbides can be identified.

### Carbide Evaluation (A)

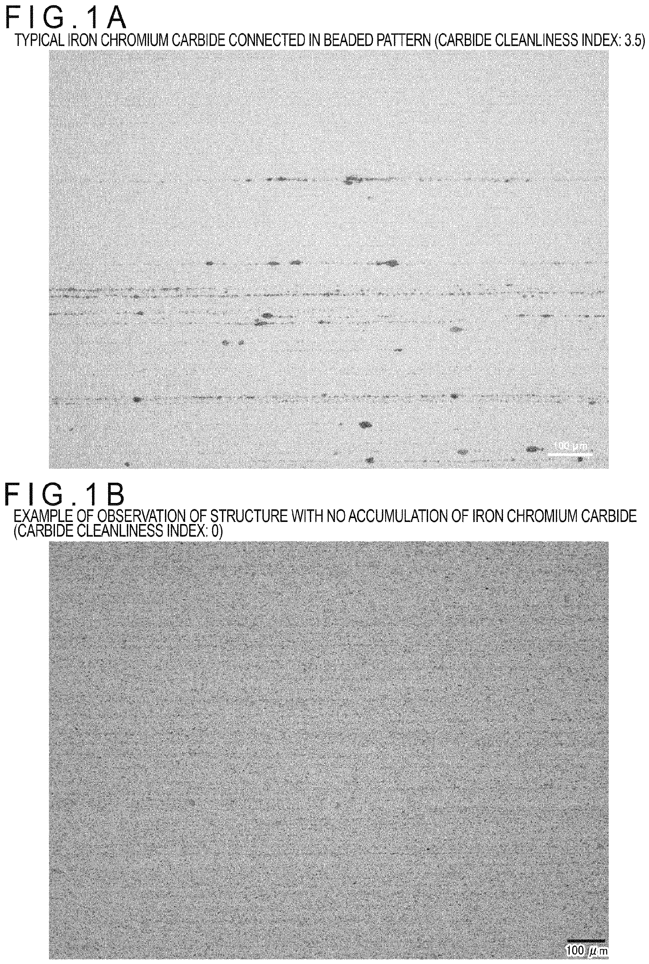

Figs. 1A and 1B each show an example of coarse carbides caused by macro-segregation colored using the Murakami's reagent. The Murakami's reagent was applied to a portion at a plate thickness of 1/2t ± 0.7 mm on a test surface parallel to a rolling direction and a plate thickness direction of the steel sheet, thereby coloring carbides. A morphology of the carbides is similar to that of Type B inclusions (alumina). Relatively large coarse carbides are distributed in a beaded or chained pattern. Therefore, after being colored on the test surface using the Murakami's reagent, the carbides can be evaluated as inclusions corresponding to Type B inclusions specified in JIS G0555 (microscopic test method for non-metallic inclusions in steel) and the evaluation is represented by a carbide cleanliness index. Fig. 1A shows a case of the carbide cleanliness index being 3.5. Fig. 1B shows a case of the carbide cleanliness index being 0. As described later, a satisfactory quality can be obtained when the inclusion cleanliness index is 3.0 or less according to the definition of the test method A of JIS G0555. 3.0 or less of the inclusion cleanliness index corresponds to 1.7 of i_{moy} in the definition of the test method B of JIS G0555.

### Carbide Evaluation (B)

In a microscopic test of the carbide cleanliness, an area ratio of carbides may be measured. An area of carbides at a plate thickness of 1/2t ± 0.7 mm on the same test surface as in the Carbide Evaluation (A) is observed with a 100-fold optical microscope and an area ratio of the carbides is obtained. 0.6% or less of the area ratio of the carbides corresponds to 3.0 or less of the inclusion cleanliness index according to the definition of the test method A and 1.7 of i_{moy} in the definition of the test method B. The carbide area ratio may be measured by EBSD. EBSD stands for Electron Back Scattered Diffraction Pattern and is a method for observing a microscopic crystal structure of a material using a scanning electron microscope.

### Carbide Evaluation (C)

Coarse carbides can also be quantified by extraction residue analysis. For instance, by an iodine-methanol method, a thin plate across the entire thickness is molten, and only coarse carbides are separated and collected with a filter having 10-µm mesh and analyzed. 0.6 mass% or less of the Cr content corresponds to 3.0 of the inclusion cleanliness index according to the definition of the test method A in the Carbide Evaluation (A). In this analysis, if the molten amount of the thin plate is too large, the filter may be clogged. The molten amount is thus preferably 1 g or less.

### Experiment

The inventors studied effects of coarse carbides distributed in a beaded pattern due to macro-segregation on properties of steel after quenching by use of a high-carbon martensitic stainless steel of the EN1.4034 steel standard. Specifically, 0.45%C-13.8%Cr-0.4%Si-0.5%Mn-0.027%P-0.001%S-0.005%AI-0.05%V-0.02%Mo-0.02%Cu-0.02%N steel was continuously cast into slabs each having a 250-mm thickness and a 1200-m width. During cooling, the slab was subjected to a carbide transformation treatment at 700 degrees C for five hours or more, and was then cooled to the normal temperature. The transformation treatment applied to some of the slabs was shortened or omitted. Subsequently, the slab was hot rolled to provide a hot rolled steel plate having a 5-mm thickness. The hot rolled steel plate was box-annealed at 850 degrees C for four hours, pickled, and cold rolled to have a 3.0-mm thickness. Subsequently, the obtained plate was annealed at 780 degrees C for 60 seconds, pickled, and temper-rolled to obtain a thin sheet product.

A plate-shaped test piece having a 150-mm length and a 70-mm width was cut from each portion in the width direction of this thin plate coil, heated at 1050 degrees C for 10 minutes, and then die-quenched.

As for the thin plate products before quenching, a portion at a plate thickness of 1/2t ± 0.7 mm parallel to a rolling direction and a thickness direction of the steel sheet was a test surface for microscope observation on a cross section of the sample. Carbides were colored and etched with the Murakami's reagent. The cleanliness of the inclusions limited to the carbides was measured according to the definition of the test method A where the inclusions are defined as Type B inclusions specified in JIS G0555. Hereinafter, cleanliness of inclusions limited to inclusions (carbides) that are colored and etched with the Murakami's reagent was defined as the carbide cleanliness. The carbides evaluated in terms of the cleanliness of the carbides also included nitrides having a mass fraction of 30% or less. Carbides are composite carbides of Cr and iron and contained elements such as Mo and V at a rate of 10% or less. The test method complied with JIS G0555.

Further, quenched samples were treated as follows: a surface of the steel sheet that was at the plate thickness of 1/2t and was parallel to a top surface of the steel sheet was finish-polished with #600 as a test surface, and was then subjected to the salt spray test specified by JIS Z 2371 for 24 hours. A rust level of the samples was evaluated. A sample having no rust was defined as Pass. A sample having spot rust or flowing rust was defined as Fail.

The polished surfaces of these samples sometimes had streaky defects, and the degree of such defects was ranked in three grades as abrasivity. A sample with no streaky defects was defined as Rank 1. A sample with a few streaky defects was defined as Rank 2. A sample with more streaky defects was defined as Rank 3. A sample determined as Rank 1 or 2 was defined as Pass.

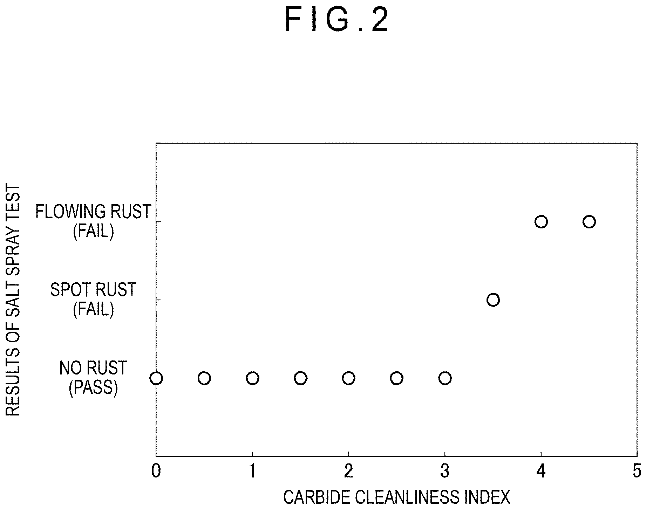

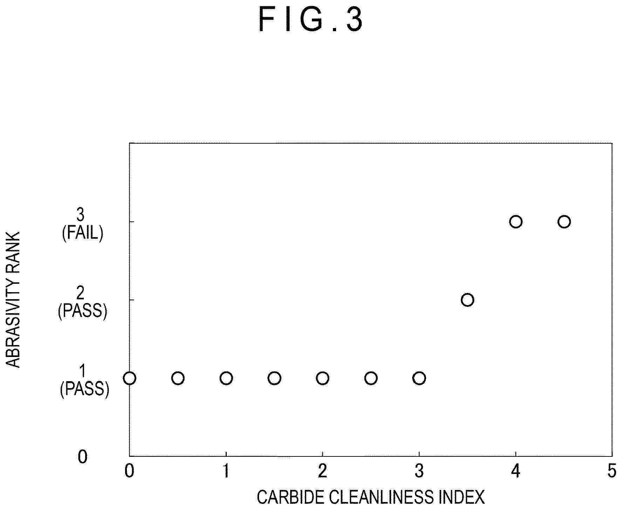

Firstly, Fig. 2 shows a comparison between the carbide cleanliness index and the corrosion test results. The correspondence between the carbide cleanliness index and the corrosion test results in this test was clear. When the carbide cleanliness index was 3.0 or less, no corrosion was observed on the surface at the plate thickness of 1/2t where the above rust evaluation was performed. The number of corrosions tended to increase with increasing carbide cleanliness index. Traces of coarse carbides were also observed at the corrosion origin points and therefore a decrease in the corrosion resistance was considered to be caused by sensitization and a crevice structure due to coarse carbides. Next, Fig. 3 shows a relationship between a rank of the streaky defects on the polished surface and the carbide cleanliness index. It is also shown here that abrasivity decreases with increasing carbide cleanliness index. It is found that no streaky polish defect is generated on the polished surface when the carbide cleanliness index is 3.0 or less.

Based on these results, in the invention, the carbide cleanliness index, which is a quantitative evaluation of carbides, is set to 3.0 or less. In this test, the corrosion resistance and abrasivity were evaluated by performing polishing up to a plate-thickness central portion to expose the portion with the lowest degree of carbide cleanliness. A plate-thickness cross section is exposed on an end surface of, for instance, a cutter, and thus the carbide cleanliness needs to improve also at the plate-thickness central portion.

A martensitic stainless bladed product of the invention is obtained by the above-described stainless steel sheet of the invention as a base material being shaped into a cutter and subjected to the quenching heat treatment.

### Manufacturing Method of Steel Sheet

Desirable manufacturing conditions are listed below together with representative manufacturing conditions.

It is desirable to manufacture steel therefor by continuous casting with high efficiency. A plate thickness of slab is in a range from 150 to 280mm and a width thereof is in a range from 600 to 1500mm. As the slab thickness is thinner, the macro-segregation tends to be reduced. However, since the productivity is decreased, the slab thickness is desirably in a range from 200 to 260 mm. During cooling the slab, it is required for making coarse carbides of the slab harmless to perform the transformation treatment for five hours or more in a temperature range from 800 to 600 degrees C. This transformation treatment produces the similar effects to that of an isothermal treatment and slow cooling.

The slab needs to be treated as follows: the slab is heated at a heating temperature in a range from 1200 to 1300 degrees C and is kept for 40 minutes or more during hot rolling, whereby coarse carbides form a solution and macro-segregation elements are diffused to provide a uniform structure. Heating of the slab in a furnace for a long time exceeding five hours or more is called soaking. Since a lot of slabs are concurrently present in a heating furnace for hot rolling of steel strips, it is difficult to make a specific slab present in the heating furnace for a long time. Therefore, in order to reduce macro-segregation by soaking, it is effective to perform a heat treatment in a heating furnace for blooming, a heating furnace for slabs for a thick plate, and the like. In order to reduce macro-segregation by soaking for a slab with macro-segregation, it is desirable to heat the slab at a temperature in a range from 1200 to 1250 degrees C for four hours or more. A step called breakdown or blooming is a step of making a slab structure uniform and processing a slab into a predetermined shape by heating the slab at a temperature in a range from 1200 to 1300 degrees C for 30 minutes or more and hot rolling the slab with total rolling reduction in a range from 15 to 30%. Performing breakdown or blooming before hot rolling, which makes the structure more uniform, is effective for reducing macro-segregation and inhibiting coarse carbides in a thin plate. However, performing breakdown or blooming increases production costs and steps. Accordingly, it is desirable to apply breakdown or blooming only to a slab with noticeable macro-segregation.

The slab is hot-rolled into a hot rolled steel strip having a plate thickness in a range from 2 to 10 mm. The hot rolled steel strip is coiled at a temperature in a range from 800 to 900 degrees C and cooled to the normal temperature. A coiling temperature is desirably in a range from 830 to 880 degrees C in order to satisfy both inhibiting scales and softening precipitation of carbides.

Next, as annealing conditions of the hot rolled steel strip, the hot rolled steel strip needs to be softened in order to improve workability before quenching. Since a sufficient annealing time for softening cannot be secured in a continuous annealing furnace, it is desirable to apply a heat treatment to the hot rolled steel strip in a batch annealing furnace in a temperature range of 750 to 900 degrees C for two hours or more. Softening becomes insufficient at a temperature of less than 750 degrees C. Annealing at a temperature exceeding 900 degrees C for a long time unfavorably causes an non-uniform structure of a top layer and a change in a quality of a material due to nitride formation and decarburization in the top layer because of an influence of atmospheric gas. In the heat treatment for less than two hours, variations in the quality of the material inside the coil occur due to a non-uniform temperature inside the coil.

The hot rolled sheet strip is annealed and pickled to provide a hot rolled product, which is a martensitic stainless steel sheet of the invention.

The hot rolled product may be further cold rolled and annealed to provide a cold rolled product, which is also a martensitic stainless steel sheet of the invention. The cold rolling conditions and the annealing conditions may be conditions normally used.

### Heat Treatment Method of Product

Regarding the quenching heat treatment for the bladed product and other products, it is desirable that after the martensitic stainless steel sheet of the invention is processed into a product, the product is kept in a temperature range from 950 to 1100 degrees C for five seconds to 30 minutes for quenching. At the heating temperature of less than 950 degrees C, carbonitrides is insufficiently made into a solution and an intended quenching hardness is not obtained. At the heating temperature of 950 degrees C or more, carbonitrides can be made into a solution and a structure mainly including austenite is obtained. As the heating temperature becomes higher, grain growth of austenite proceeds and mechanical qualities after quenching is impaired. The heating temperature is thus desirably 1100 degrees C or less. A heating time here also requires five seconds or more in order to promote formation of a solution. When the heating time is less than five seconds, solutes C and N are less and a sufficient hardness is not obtainable. On the other hand, when the heating time exceeds 30 minutes, unfavorably, surface oxidation increases, and corrosion resistance and hardness after quenching decrease due to decarburization of the top layer.

### Examples

Steels having values (mass%) of chemical compositions shown in Tables 1 and 2 were molten and then continuously cast into slabs each having a 200-mm thickness and a 1030-mm width using a continuous casting machine. Subsequently, as shown in "manufacturing steps" in Tables 3 and 4, under conditions shown in classification marks A to K in Table 5, a treatment for reducing carbides was conducted in a stage of slabs and hot-rolled coils were manufactured. The slabs after the treatment for reducing carbides in the stage of the slabs were slowly cooled to the normal temperature. The slabs were heated under the hot rolling heating conditions shown in Table 5 and kept for one hour. Subsequently, the slabs were hot-rolled to have a plate thickness of 5 mm, and coiled at a coiling temperature shown in Table 5. Subsequently, after the heat treatment for four hours at the hot rolled sheet annealing temperature shown in Table 5, the slabs were tempered by being cooled in a furnace, thereby providing hot rolled products. Subsequently, the hot rolled products were pickled, cold rolled to have a plate thickness of 3 mm, then annealed, and pickled to provide cold rolled products. Test pieces were respectively taken from plate-width 1/4 portions of the slabs. Subsequently, the test pieces were heated at 1050 degrees C for 10 minutes to perform die quenching. The test pieces were subjected to the sub-zero treatment and tempered at 200 degrees C for 30 minutes to provide quenched samples. The above hot rolled products, cold rolled products, and quenched samples were subjected to the following evaluation tests.

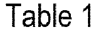

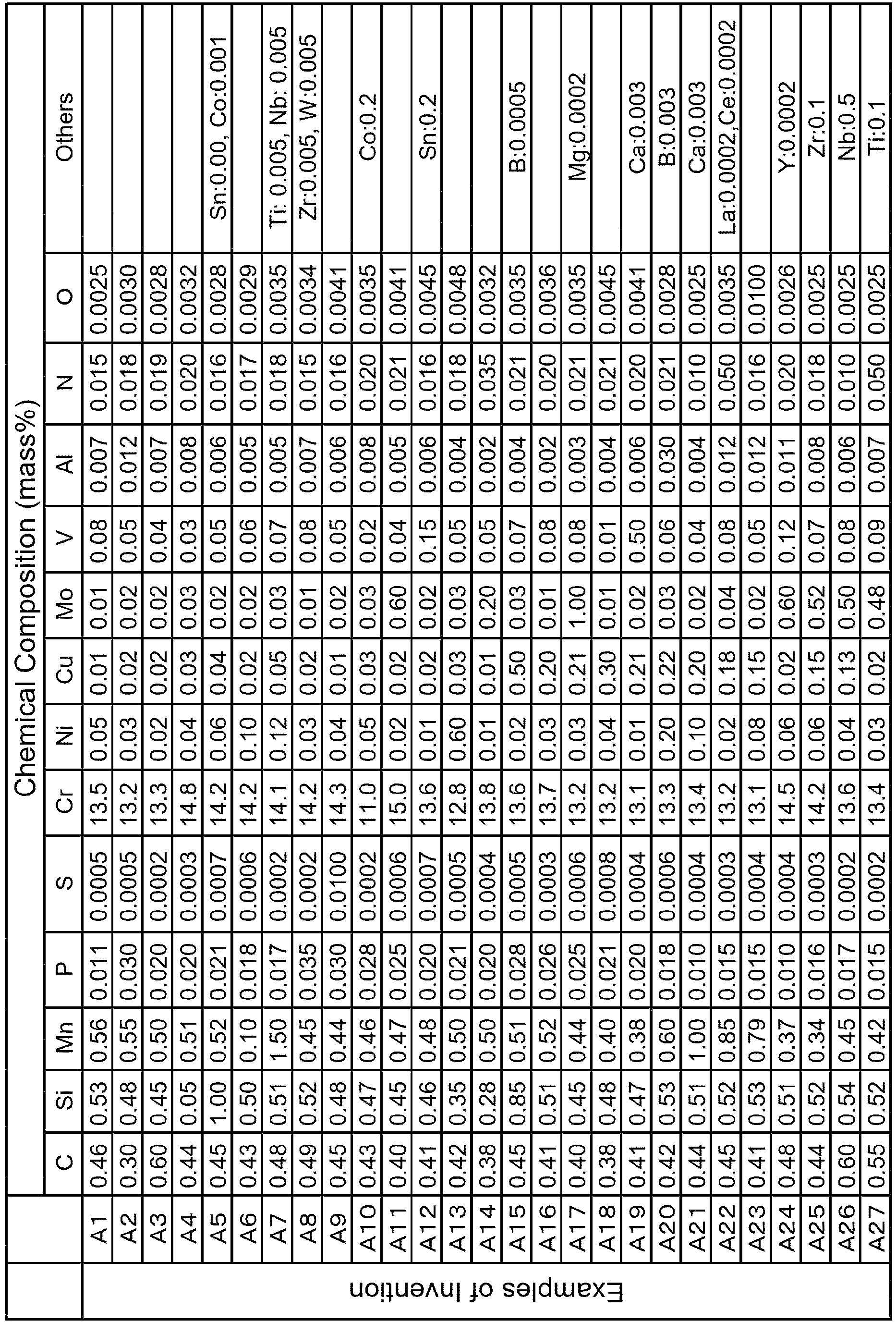

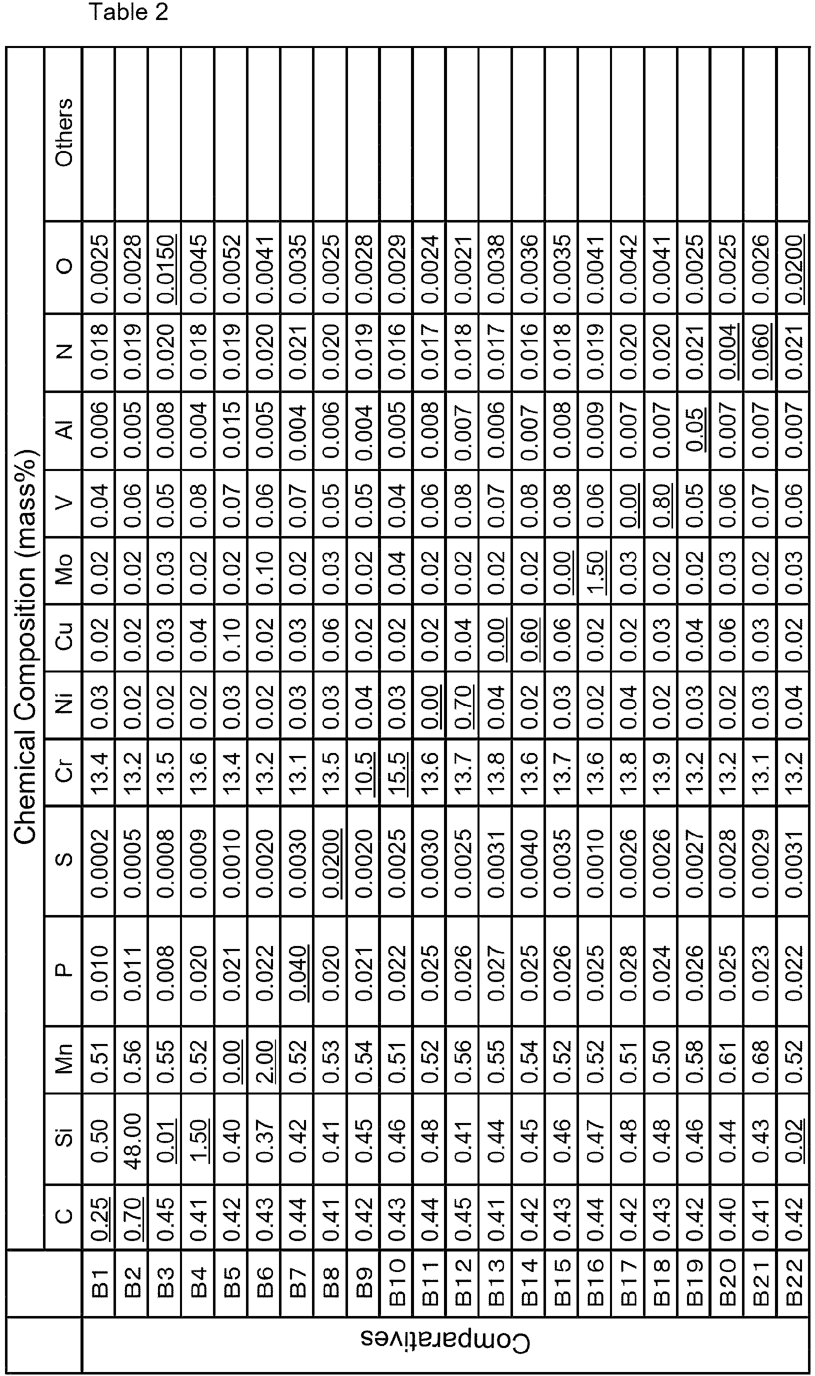

### Carbide Cleanliness

Carbide Evaluation (A) was performed as follows. In a microscopic sample having a test surface that was a cross section parallel to a rolling direction and a plate thickness direction of a steel sheet of the cold rolled product, carbides were colored and etched with the Murakami's reagent. Carbides in an area of the plate thickness of 1/2t ± 0.7 mm were measured according to the microscopic examination method for non-metallic inclusions in steel specified in JIS G0555. The evaluated carbides were those mainly including iron and chromium. Since the carbides mainly including iron and chromium to be colored and etched with the Murakami's reagent exhibit distribution similar to that of alumina inclusions, the cleanliness index of the carbides was determined according to the definition of the test method A with application of the measurement criteria of Type B specified in JIS G0555. Evaluation was also performed according to the test method B for reference.

Carbide Evaluation (B) was performed as follows. In a microscopic sample having a test surface that was a cross section parallel to a rolling direction and a plate thickness direction of the steel sheet, carbides were colored and etched with the Murakami's reagent. Carbides in the area of the plate thickness of 1/2t ± 0.7 mm were evaluated in terms of the carbide area ratio using a 100-fold optical microscope. Similar results are obtainable by the EBSD method for the measurement of the carbide area ratio.

Carbide Evaluation (C) was performed as follows. A thin plate across the entire thickness was molten, and only coarse carbides were separated and collected with a filter having 10-µm mesh and analyzed. According this method, the carbides were quantified by extraction residue analysis and the Cr content was evaluated.

As with the above-described cold rolled steel sheets, carbide cleanliness indexes of the hot rolled products and the quenched samples were determined according to the definition of the test method A with application of the measurement criteria of Type B specified in JIS G0555 (Carbide Evaluation (A)), the carbide area ratio evaluation (Carbide Evaluation (B)), the extraction residue analysis (Carbide Evaluation (C)). The similar results to those of the corresponding cold rolled products were obtained.

### Hot Rolling Defects

A hot rolled product with visible cracks on an end surface of the hot rolled sheet and/or with scabs on a surface of the hot rolled sheet was determined to be Fail as having hot rolling defects. A hot rolled product with no cracks on an end surface of a coil was defined as Rank A. A hot rolled product with cracks of 0.5 or less on the end surface of the coil was defined as Rank B. A hot rolled product with defects exceeding 0.5 on the end surface of the coil was defined as Rank C. Ranks were described in a column of hot rolling defects in Tables 3 and 4.

### Hardness

Hardness of the quenched sample was measured with a Vickers hardness tester at the 1/4t and 1/2t portions of the plate thickness cross-section. 500 Hv or more of an average of the measurement values was determined as Pass (A) for stainless steel for cutters and the other average was Fail (C).

### Corrosion Resistance and Abrasivity

A surface of the quenched sample was ground with a milling machine and polished and flattened so that a plate-thickness central portion was exposed. Subsequently, the sample surface was polished with sandpaper and then buffed for mirror finish.

The salt spray test specified in JISZ2371 was conducted to evaluate the presence or absence of rust. A sample with no rust was defined as Pass (A) and the other sample was defined as Fail (C) in terms of corrosion resistance.

Before the corrosion test, a sample in which a defect having a length exceeding 2 mm was observed on the polished surface and a sample in which inclusion defects were visually distinguished were defined as Poor Abrasivity (C). A sample with a defect having a length of 2 mm or less was defined as Poor Abrasivity (B). The sample(s) other than the above was defined as Abrasivity Pass (A).

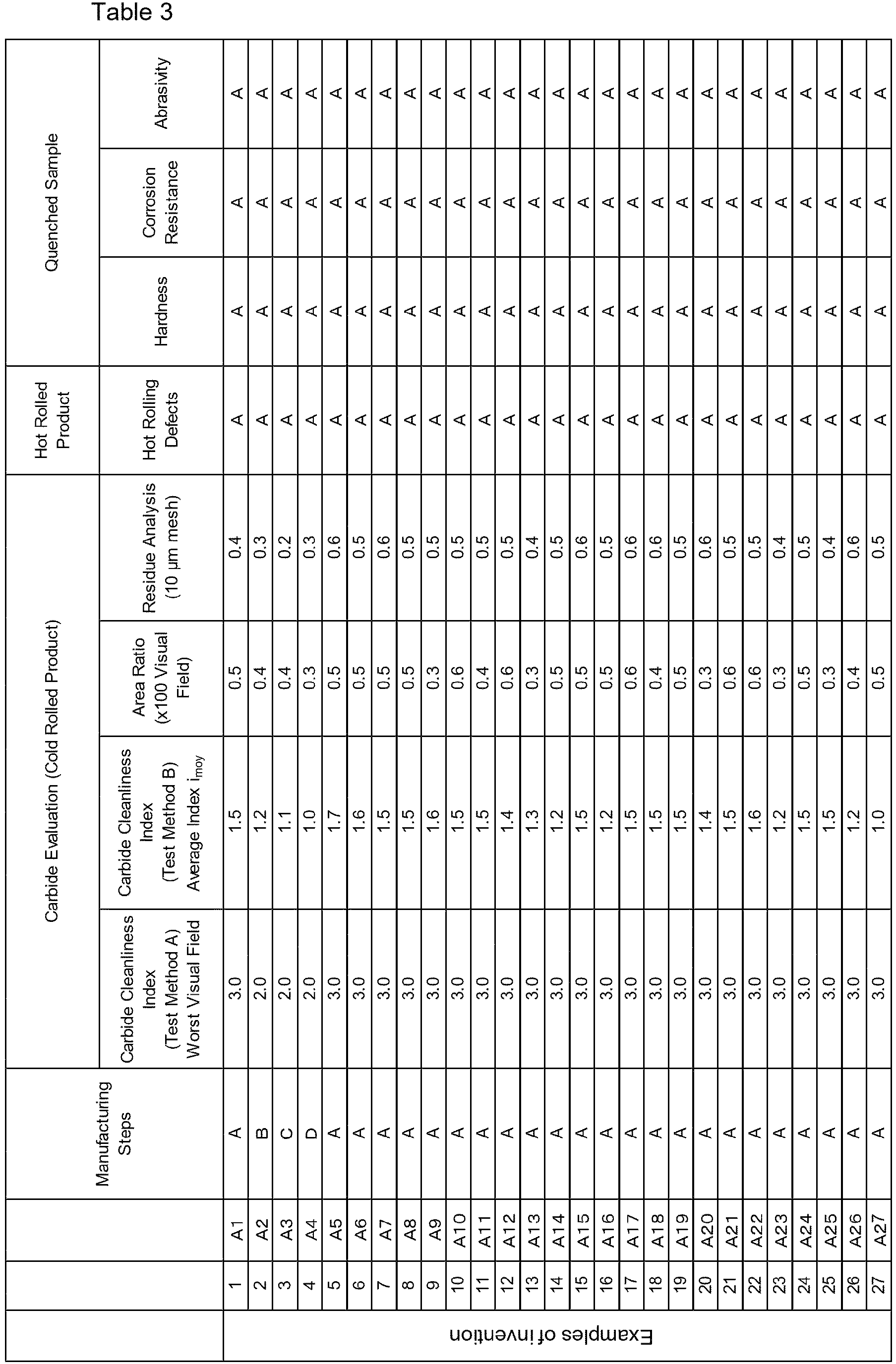

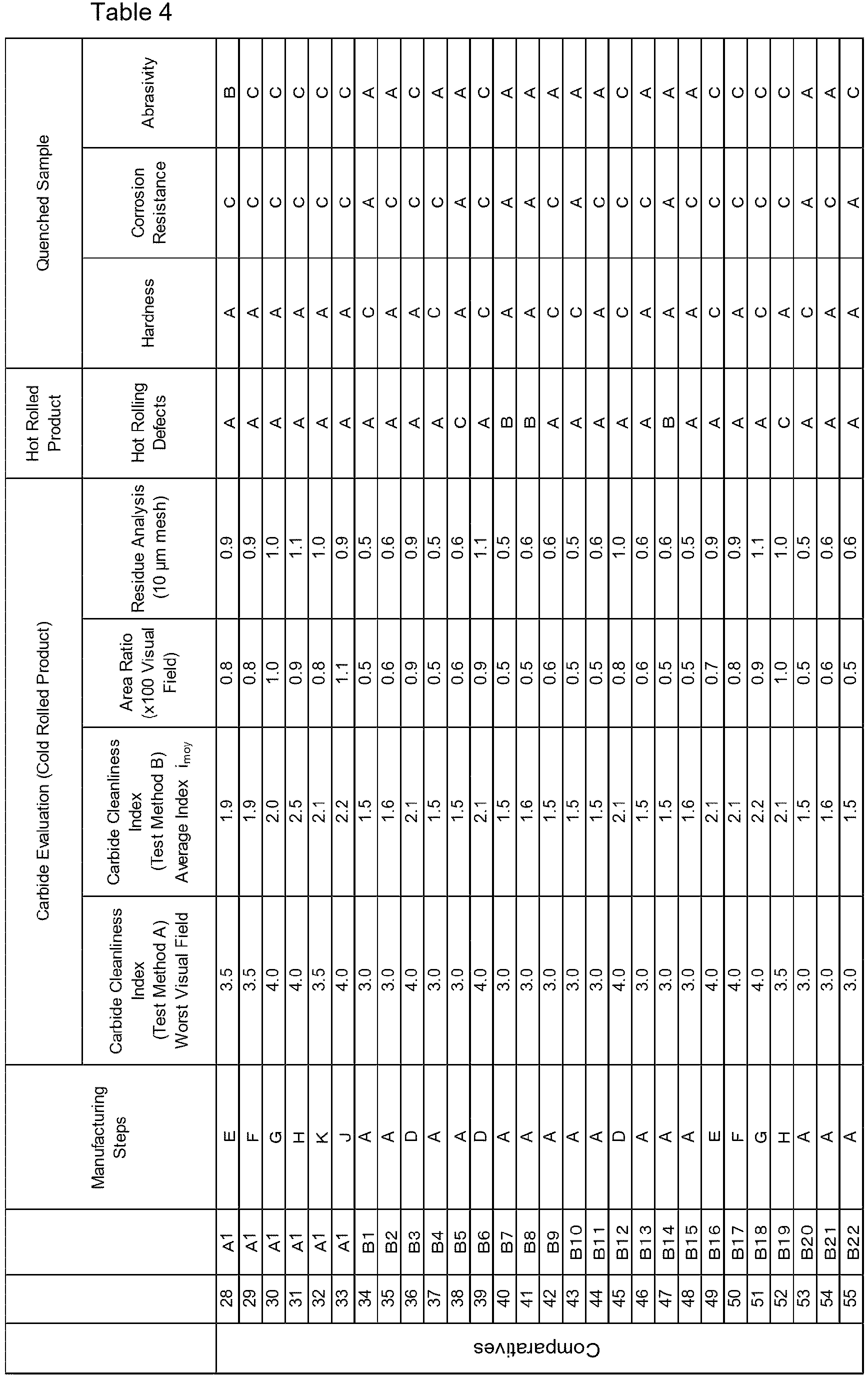

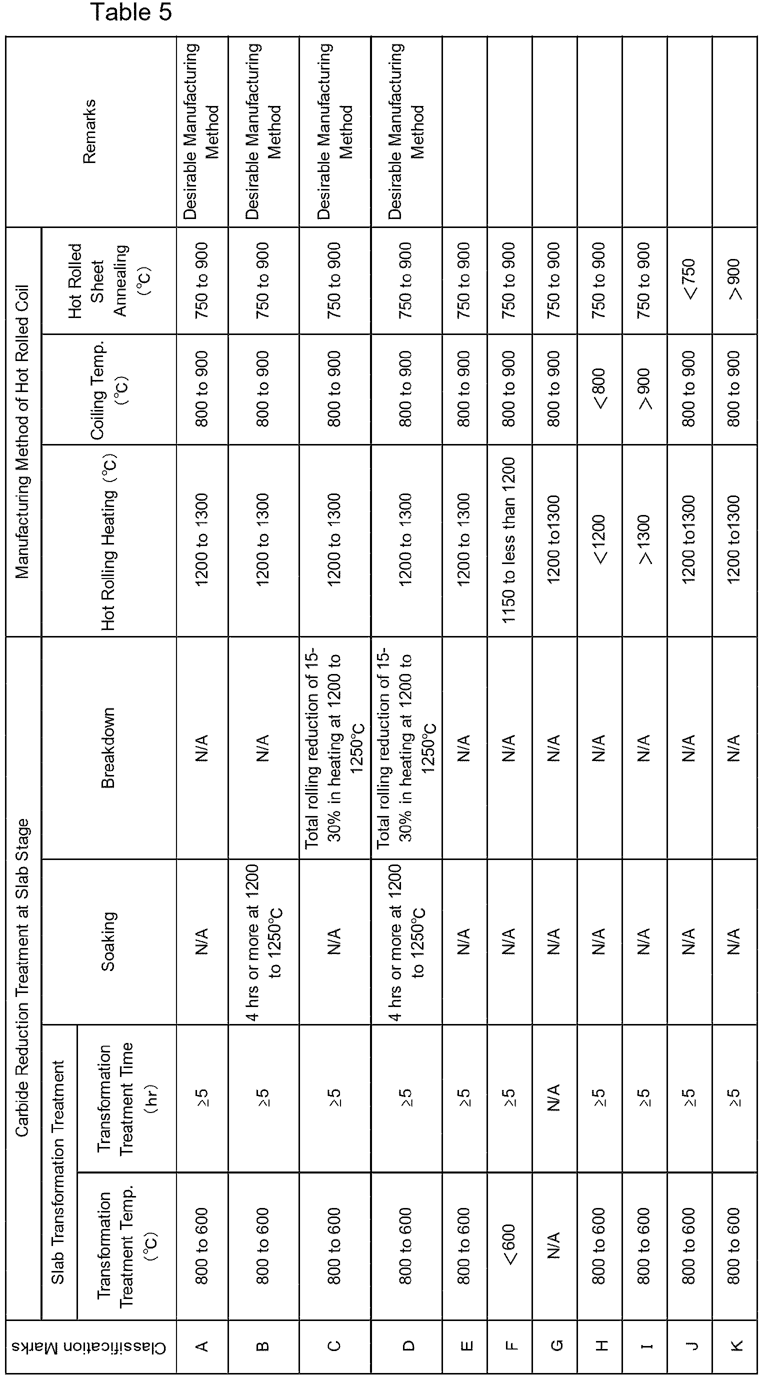

As understood from the results shown in Tables 3 and 4, the steels of the invention have 550 Hv or more of the hardness after quenching and tempering and have an excellent corrosion resistance in practical environments as seen from no occurrence of rust in the salt spray test after quenching. Here, each steel of the invention satisfies that: the carbide cleanliness index is 3.0 or less according to the definition of the test method A with application of the measurement criteria of Type B specified in JIS G0555; the carbide area ratio on a surface of the plate-thickness 1/2t of the steel sheet, which is evaluated using a 100-fold optical microscope, is 0.6% or less; and the Cr content quantified by extraction residue analysis is 0.6 mass% or less, where the carbides in a microscopic sample parallel to the rolling direction and the plate thickness direction of each steel sheet are colored and etched with the Murakami's reagent in the area of the plate thickness of 1/2t ± 0.7 mm.

In contrast, when components of steel fall out of the range of the invention, corrosion resistance and quenching hardness were insufficient or other properties (hot workability) were poor, so that the steel was defined as Fail in terms of productivity, quality and costs.

Specifically, Nos. 28 to 33, 36, 45, and 49 to 51 shown in Table 4 each had the carbide cleanliness index exceeding 3.0 according to the test method A of Carbide Evaluation (A), and were all poor in corrosion resistance. As for abrasivity, all samples other than No. 28 were Fail.

Even having the carbide cleanliness index of 3.0 or less according to the test method A, No.34 had a low C content and a low quenching hardness. No. 35 had an excessive carbon content to cause intergranular corrosion.

Nos. 36 and 55 had insufficient deoxidation, high oxygen content, and poor abrasivity due to oxides defects.

In Nos. 37, 39, 43, 45, and 49, the amount of alloy added was large, and a decrease in the Ms point increased residual gamma and decreased the hardness.

Nos. 38, 40, 41, and 47 had poor hot workability and generated cracked edges and surface defects during hot rolling. In Nos. 42, 44, 46, and 48, since contents of Cr, Ni, Cu and Mo were small, corrosion resistance after quenching decreased. It is considered that the low Cr content promoted pitting corrosion, and the low Ni, Mo, and Cu contents promoted the progress of pitting corrosion, resulting in a decrease in corrosion resistance.

Since No. 50 had a low V content, the carbides tended to coarsen and corrosion resistance was lowered.

No. 51 had a high V content and solutioninzing of carbides was delayed, resulting in a decrease in hardness.

No. 52 had a high Al content, and oxides had a high melting point and did not stretch during hot rolling, resulting in surface defects after hot rolling.

No. 53 had a low N content and solutioninzing was delayed, resulting in a decrease in hardness.

No. 54 had a high N content, and blowholes caused solidification delays and accelerated segregation, resulting in a decrease in corrosion resistance.

### INDUSTRIAL APPLICABILITY

The invention makes it possible to manufacture a high-carbon martensitic stainless steel excellent in corrosion resistance and abrasivity at a low cost and with a high productivity. Therefore, the invention contributes to significantly reducing the manufacturing cost and significantly improving quality of stainless steel for western tableware knives, stainless kitchen knives, tools, and two-wheel disc brakes.

## Claims

1. A martensitic stainless steel sheet comprising a steel composition comprising: by mass%, 0.30 to 0.60% of C; 0.05 to 1.00% of Si; 0.10 to 1.50% of Mn; 0.035% or less of P; 0.010% or less of S; 11.0 to 15.0% of Cr; 0.01 to 0.60% or less of Ni; 0.01 to 0.50% of Cu; 0.01 to 1.0% of Mo; 0.01 to 0.50% of V; 0.03% or less of Al; 0.01 to 0.05% of N; 0.01% or less of O; and a balance consisting of Fe and inevitable impurities,
the martensitic stainless steel sheet satisfying:
(A) carbides observed in an area of a plate thickness of 1/2t ± 0.7 mm on a test surface parallel to a rolling direction and a plate thickness direction of the steel sheet comprises 3.0 or less of a carbide cleanliness index, the carbides being defined as inclusions corresponding to inclusions of Type B specified in JIS G0555;
(B) a carbide area ratio in the area of the plate thickness of 1/2t ± 0.7 mm on the test surface parallel to the rolling direction and the plate thickness direction of the steel sheet is 0.6% or less through observation using a 100-fold optical microscope; and
(C) a content of coarse carbides collected with a filter having 10-µm mesh in an extraction residue analysis with respect to an entire thickness of the steel sheet is 0.6 mass% or less in terms of a Cr content,
wherein the carbides in the (A) and (B) are colored with Murakami's reagent, and the carbide cleanliness index is inclusion cleanliness defined in the test method A of JIS G0555 in the (A), and in the (B), the carbide area ratio is optionally measured by EBSD method.

2. The martensitic stainless steel sheet according to claim 1, wherein in addition to the above elements and in place of a part of the Fe, the steel composition further comprises: one or more elements of 0.001% to 0.20% of Sn, 0.001% to 0.20% of Co, 0.005% to 0.1% of Ti, 0.005% to 0.5% of Nb, 0.005% to 0.1% of Zr, 0.005% to 0.1% of W, 0.0005% to 0.0030% of B, 0.0001% to 0.0030% of Ca, 0.0001% to 0.0030% of Mg, 0.0001% to 0.0030% of La, 0.0001% to 0.0030% of Ce, and 0.0001% to 0.0030% of Y.

3. A martensitic stainless bladed product comprising a steel composition comprising: by mass%, 0.30 to 0.60% of C; 0.05 to 1.00% of Si; 0.10 to 1.50% of Mn; 0.035% or less of P; 0.010% or less of S; 11.0 to 15.0% of Cr; 0.01 to 0.60% or less of Ni; 0.01 to 0.50% of Cu; 0.01 to 1.0% of Mo; 0.01 to 0.50% of V; 0.03% or less of Al; 0.01 to 0.05% of N; 0.01% or less of O; and a balance consisting of Fe and inevitable impurities,
the martensitic stainless bladed product satisfying:
(A) carbides observed in an area of a plate thickness of 1/2t ± 0.7 mm on a test surface parallel to a rolling direction and a plate thickness direction of the steel sheet comprises 3.0 or less of a carbide cleanliness index, the carbides being defined as inclusions corresponding to inclusions of Type B specified in JIS G0555;
(B) a carbide area ratio in the area of the plate thickness of 1/2t ± 0.7 mm on the test surface parallel to the rolling direction and the plate thickness direction of the product is 0.6% or less through observation using a 100-fold optical microscope;
(C) a content of coarse carbides collected with a filter having 10-µm mesh in an extraction residue analysis with respect to an entire thickness of the product is 0.6 mass% or less in terms of a Cr content; and
hardness of a portion at a plate thickness of 1/2t of the product is Hv 500 or more,
wherein the carbides in the (A) and (B) are colored with Murakami's reagent, and the carbide cleanliness index is inclusion cleanliness defined in the test method A of JIS G0555 in the (A), and in the (B), the carbide area ratio is optionally measured by EBSD method.

4. The martensitic stainless bladed product according to claim 3, wherein in addition to the above elements and in place of a part of the Fe, the steel composition further comprises: one or more elements of 0.001% to 0.20% of Sn, 0.001% to 0.20% of Co, 0.005% to 0.1% of Ti, 0.005% to 0.50% of Nb, 0.005% to 0.1% of Zr, 0.005% to 0.1% of W, 0.0005% to 0.0030% of B, 0.0001% to 0.0030% of Ca, 0.0001% to 0.0030% of Mg, 0.0001% to 0.0030% of La, 0.0001 % to 0.0030% of Ce, and 0.0001% to 0.0030% of Y.

5. A manufacturing method of the martensitic stainless steel sheet according to claim 1 or 2, the manufacturing method comprising:
casting a slab of the stainless steel comprising the steel composition according to claim 1 or 2;
subsequently subjecting the slab to a heat treatment for five hours or more at a temperature in a range from 800 to 600 degrees C during cooling of the slab;
subsequently heating the slab for 40 minutes or more at a temperature in a range from 1200 to 1300 degrees C;
hot-rolling the slab using a tandem hot rolling mill in which rough hot rolling and finish hot rolling are performed in series to provide a hot rolled sheet;
coiling the hot rolled sheet at a temperature in a range from 800 to 900 degrees C; and
subsequently annealing the coiled hot-rolled sheet for two hours or more at a temperature in a range from 750 to 900 degrees C.

6. The manufacturing method of the martensitic stainless steel sheet according to claim 5, further comprising: subsequent to the annealing of the hot rolled sheet, subjecting the annealed hot-rolled sheet to cold rolling and annealing.
